# EUROPEAN PATENT SPECIFICATION

(11) **EP 1 077 032 B1**
(45) Date of publication and mention of the grant of the patent: **23.03.2005**
(21) Application number: 00830472.7
(22) Date of filing: 05.07.2000
(51) Int. Cl.: A22C 17/00

(54) **A head for boning meat cuts such as hams and the like**
Einrichtung zum Entbeinen von Fleischteilen wie Schinken und dergleichen
Dispositif de désossement de portions de viande tels que jambon et analogues

(30) Priority: 13.07.1999 IT BO990391
(43) Date of publication of application: 21.02.2001
(73) Proprietor: MIEM S.r.l., 41051 Castelnuovo Rangone (Modena) (IT)
(72) Inventor: Cavilli, Gianfranco, 41057 Spilamberto (Modena) (IT); Bortolotti, Ivano, 41057 Spilamberto (Modena) (IT)
(74) Representative: Lanzoni, Luciano

(56) References cited:
- FR-A- 2 619 677
- FR-A- 2 633 157
- US-A- 4 068 350
- US-A- 4 639 974
- US-A- 5 003 665

## Description

The present invention relates to a head for boning meat cuts such as hams, shoulders and the like.

For the industrial boning of meat cuts, such as hams, shoulders and the like of pork, beef, etc., two different methods are currently known.

The first one provides for extracting the bone from the meat by making the meat cut pass through an opening with variable clearance which substantially operates a drawing operation on the meat cut in the sense that it strips it from the bone.

It is evident that the bone, once extracted, is not perfectly stripped of the meat that covered it, in that a large part thereof still remains attached because the device in itself is not capable of correctly following the profile of the bone.

The second method instead provides for the use of a plurality of knives rotating about the bone and moved along it to envelop and strip it of the meat according to a predetermined profile.

Italian Patent no. 858 009 describes an apparatus provided with a plurality of blades borne by a rotating head and with means for supporting and lifting the meat cut relative to the blades.

The head is made of two axially hollow cylindrical or cone frustum shaped parts, coaxial and inserted one inside the other and independently actuated, one directly and the other one through a clutch element or by means of a differential gearing.

The blades are articulated with their opposite extremities to the parts that comprise the head, so that a relative rotation thereof causes an equal and simultaneous movement of all blades away from or towards the axis of rotation of the head. On each blade is usually obtained a notch having the function of shearing the tendons present in the meat cut.

The two parts of the head are normally actuated with different angular speeds so that the blades are approached to said axis of rotation and thus kept in contact with the exterior surface of the bone.

The presence of the clutch element assures control of the force exerted by the blades on the bone, since an increase in the section thereof causes an increase in its reaction torque on the blades with the consequent slipping of the clutch and deriving decrease in the speed of the external part with the subsequent widening of the blades. If instead the section of the bone undergoes a decrease, the different rotation speed of the two parts of the head brings the blades back in contact against it.

Similarly to the clutch command, the use of a differential gearing for the actuation of one of the two parts comprising the head allows to improve the relative motion of the blades with respect to the bone approaching or removing the blades depending on the dimensions of the section of the bone.

This apparatus allows more faithfully to follow the shape of the surface of the bone, but it also has several drawbacks due to irregularities in the dimensions and shape of the bone itself.

A variation of this type of apparatuses provided with rotating blades is described in Italian Patent no. 1 220 408 in which each blade of the head is commanded in its motion relative to the bone by a pneumatic cylinder activated by a respective pneumatic system comprising a conduit and a source of pressurised gas.

Pneumatic devices are also used in commanding the differential gearing, such command is provided by an apparatus that controls in feedback the force exerted by the blades on the bone.

It is also known, from document US 4068350, a drive mechanism for causing a plurality of follower members to follow the contour of an elongated article moved axially through an opening formed by the follower members. The follower members are supported for rotation on a pair of rotatably mounted annular members and driven by a common drive. As the angular position or phase of the annular members is changed with respect to each other, the follower members are urged to move toward or away from the axial center to follow the contour of the elongated article. One of the annular members is coupled directly to the common drive while the other is connected to the drive through a differential mechanism by which the phase relationship of one of the members can be varied with respect to the other to thereby position the follower members into contour following engaging relationship with the elongated article.

Common drawbacks in the devices provided with rotating heads equipped with blades are substantially to be attributed to the shape of the blades; the cutting profile of these blades is not such as to adapt itself to the different and variable dimensions of the bone to be worked, often causing both an ineffective detachment of the meat from the bone, with an evident wastage of meat and, on the other side, a turning of the bone whose effect is that of compromising the edge of the blades as well as the production of undesired bone chips and dusts in proximity with the meat cut.

An additional drawback is due to the angle of inclination of the aforesaid tendon-cutting notch: it frequently causes chipping and splintering in the bone. The presence of bone chips in the meat compromises the success of the product and as a consequence thereof it is necessary to complete the boning of the meat cut manually, which leads to an inevitable increase in production costs and times.

It is evident that to the proper operation of the head contributes a correct positioning of the meat cut which must then be worked by the head itself.

The meat cut is manually secured to the aforesaid means for supporting and moving the cut itself relative to the blade, which impart a traction on the bone to be stripped through the blades of the rotating head.

The operation of securing the meat cut to the aforesaid support means is executed manually by the operator who must simultaneously hold the meat cut itself raised in the vertical position. Given the considerable weight of the individual meat cut to be worked, and considering the incessant frequency of this kind of operation, it is understandable that the heavy physical effort expended by the operator during the aforementioned securing operation is to the detriments of the precision of that operation.

A further drawback therefore is that a probable incorrect positioning of the meat cut may prevent an effective operation of the blades on the meat cut itself.

The aim of the present invention therefore is that of providing a head according to one or more of claims from 1 to 6 that is able to perform the boning operation while totally eliminating the aforementioned drawbacks.

A further aim of the present invention is to provide means suitable to enable the operator to position the meat cut in a simple, effective and precise manner the in correspondence with the processing station with a device for raising the meat cuts comprising a pneumatic actuator provided with a cylinder and with a related movable stem at the extremity whereof is present a cap fitted with a load sensor able to detect the presence of a meat cut to actuate said movable stem between a first extreme position for loading and a second extreme position for transferring and releasing the meat cut to the respective holding means.

The positioning operation is thus facilitated by the lifting element and the operator needs only to proceed with fastening the meat cut to the aforementioned support means without having to deal with maintaining the cut in position.

The technical features of the invention, according to the aforesaid aims, can clearly be noted from the content of the claims set out below and its advantages shall be made more readily apparent in the detailed description that follows, made with reference to the accompanying drawings, which illustrate an embodiment provided purely by way of non limiting example, in which:
- Figure 1 schematically show a portion of a machine for boning meat cuts;
- Figure 2 shows an axial bottom view of a detail of the apparatus of Figure 1 and, more specifically, a blade-holder rotating head with some parts removed the better to comprehend others;
- Figure 3 shows a view of a detail of Figure 2;
- Figure 4 schematically shows various positions assumed in use by the detail of Figure 3;
- Figure 5 shows a front view of a detail of Figure 2;
- Figure 6 shows a schematic lateral view of a detail of Figure 1.

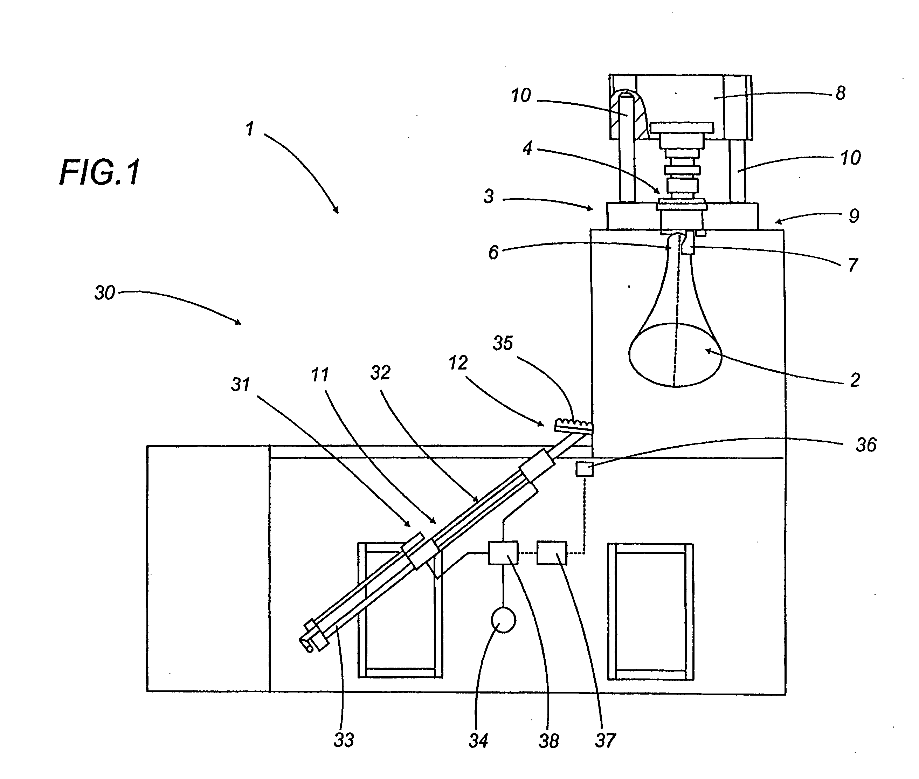

In accordance with the figures of the accompanying drawings, in Figure 1, the reference number 1 globally indicates a portion of a machine 30 for boning the meat cuts 2 such as hams and the like. In particular the machine 30 comprises a boning station 3 in turn comprising a head 4 of the type provided with a plurality of blades 5 and rotating about its axis of rotation A to detach a bone 6 from the aforementioned meat cut 2.

Known means 7 for holding an extremity of the bone 6 are borne by a carriage 8 movable vertically along a load-bearing structure 9 fitted, for instance, with a pair of vertical columns 10 along which the carriage 8 is moved by means of a fluid dynamic cylinder not shown in the figure.

The head 4 is sustained by the load bearing structure 9 below and in vertical alignment with the holding means 7 and it is axially hollow for the traversing of the bone 6 which is held superiorly by the means 7 themselves in a pendulous manner.

As shown in Figure 1, the machine 30 is also provided with a lifting device 11 for transferring the meat cuts 2 from a station 12 for feeding the meat cut 2 to the machine to a position in correspondence of the head 4 in which the holding means 7 hitch the cut 2 itself in a pre-determined point and move it along the axis A by means of the aforementioned movable carriage 8.

The lifting device 11 comprises a double action pneumatic actuator 31 substantially constituted by a cylinder 32, by a movable stem 33 and by a source 34 of pressurised gas; at an extremity of the stem 33 is located a cap 35 to receive a meat cut 2 to which cap 35 is connected a load sensor 36 in turn connected to a control and command unit 37 acting on a valve assembly 38.

When the meat cut 2 is set down on the cap 35, the load sensor 36, sensitive to the weight of the cut 2, sends a signal to the control and command unit 37, which unit 37 activates the valve assembly 38 to send pressurised gas to the cylinder 32 and cause the movable stem 33 to extend; this extension causes the meat cut 2 placed on the cap 35 to be lifted. During this phase the operator hitches the cut 2 to the means 7 for holding the cut 2 itself and, as soon as this hitching operation is complete, horizontally detaches the cut 2 from the cap 35 which is thus offloaded; the sensor 36 detects the offloaded condition of the cap 35 and sends a signal to the unit 37 which activates the assembly 38 to invert the flow of gas to the cylinder 32 in order to make the movable stem 33 return to the waiting condition, shown in Figure 1, in which the cap 35 is located in proximity of the feeding station 12.

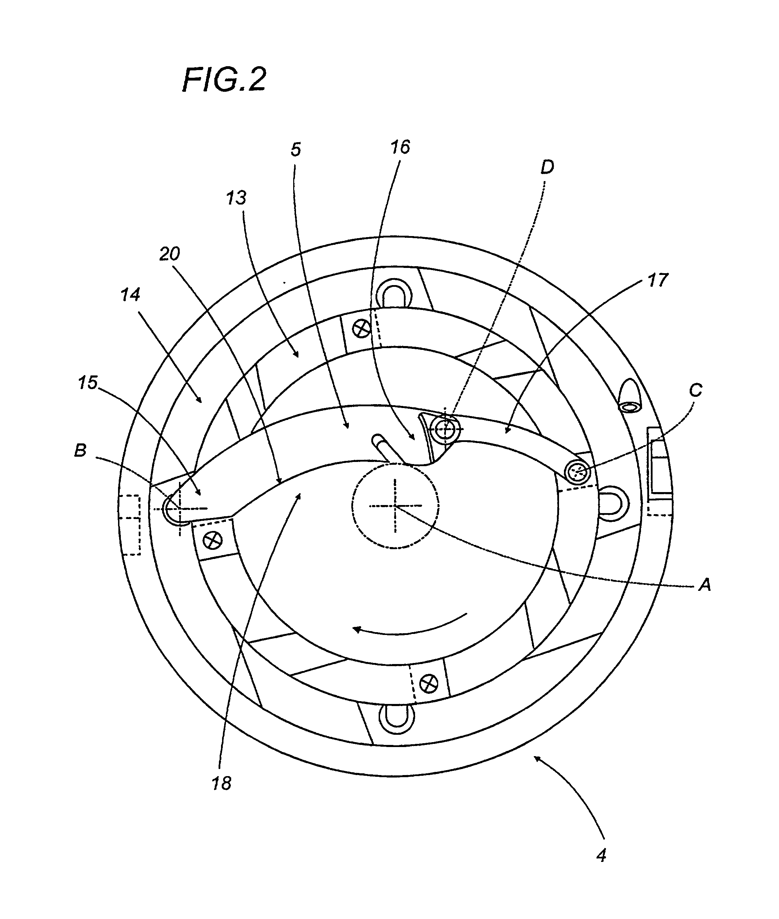

Figure 2 shows a bottom view of a head 4 for boning the meat cuts 2, comprising a first interior tubular part 13 having axis of rotation A and a second exterior tubular part 14 coaxial to the aforementioned first part 13.

The tubular parts 13 and 14 are substantially cylindrical, axially hollow to be freely traversed by a bone 6 removed from said meat cuts 2; the aforementioned parts 13 and 14 are also able to rotate both jointly and relative to each other.

The head 4 supports a plurality of blades 5, four in the preferred embodiment shown in the accompanying figures, to detach the meat from the bone 6 and each of said blades 5 is pivotingly engaged with its first extremity 15 on the second tubular part 14 and with is second extremity 16 on a crank 17 in turn pivotingly engaged on the tubular part 13.

The aforementioned points in which the blade 5 and the crank 17 are pivotingly engaged define an equal number of hinge points where rotations occur about respective axes parallel to the axis of rotation A of the head 4. An axis B defines the relative rotation between the blade 5 and the tubular part 14, an axis C defines the relative rotation between the blade 5 and the crank 17, whilst an axis D defines the relative rotation between the crank 17 and tubular part 13.

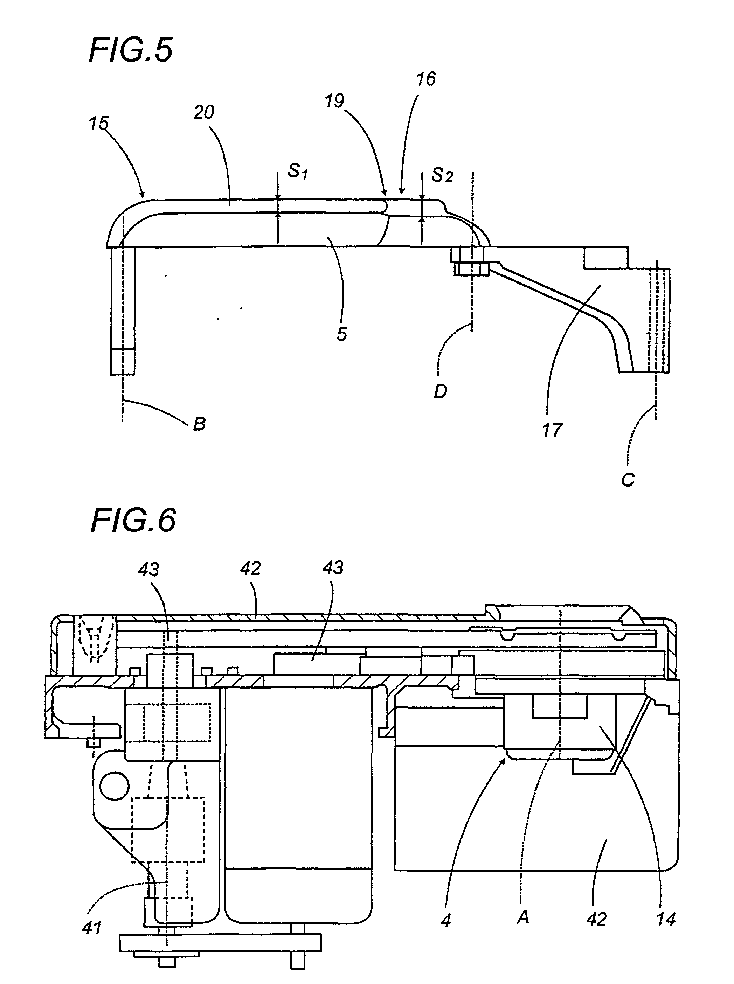

Motor means 40 (see Figure 6) provide for rotating the head 4 in its entirety, i.e. with rotating synchrony of the parts 13 and 14 and a differential gearing 41 provides for the diversification of the instantaneous speeds of rotation of the two parts 13 and 14 in order to move closer or farther away, according to a known operating principle, the blades 5, and in particular their active area 18, from the axis A of rotation of the head 4. From that movement of the blade 5 relative to the axis A originates their opening and closing in shutter form, such as to guarantee the excellent adherence of the active area 18 of the blades 5 to the profile of the bone 6. When working on the cut 2, it is important for the blades 5 to be in contact with the bone 6 in order not to lose any meat leaving it attached to the bone 6 itself with evident waste of raw material; until the blades 5 are in contact with the bone 6, the differential gearing interposed between the motor means and the head 4 causes a greater rotation of the interior part 13 than the exterior part 14, according to the direction of rotation shown in Figure 2, such as to cause the blades 5 in the head 4 to close in shutter form. When the blades 5 reach the bone 6, the resistance that derives because of the closure movement of the blades 5, causes the differential gearing to be deactivated and consequently the rotation of the two tubular parts 13 and 14 to continue synchronously; the blades 5, borne in rotation by the parts 13 and 14, thus follow the profile of the bone 6 during such rotation.

The holding means 7, after hitching the meat cut 2, prevent it from rotating about the axis A so that, in traversing the rotating hollow head 4, the cut 2 is not driven in rotation by the head 4 itself.

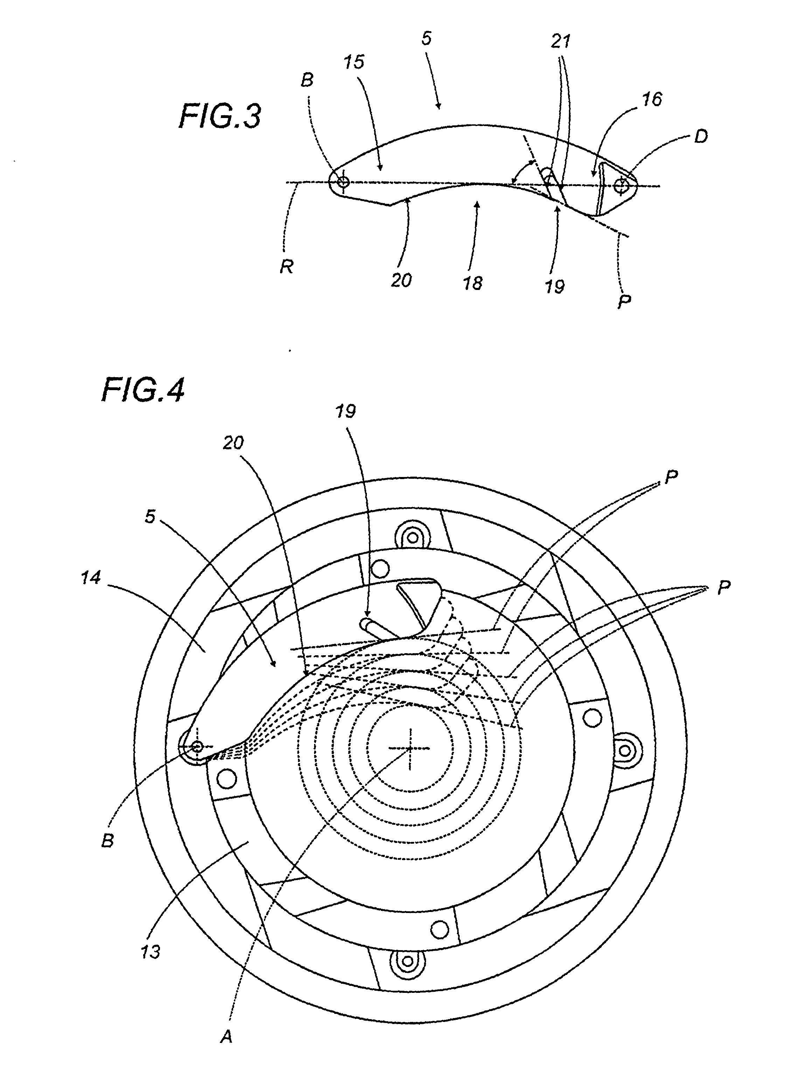

As shown in particular in Figure 3, each blade 5 presents a tendon-cutting notch 19 located in proximity to the second extremity 16 of the blade 5, which notch 19 defines a discontinuity in the interior profile 20 of the active area 18 of the blade 5.

In use, the function of said notch 19 is to grab the tendons present in the meat cut 2 and to shear them ripping them away from the bone 6 during the rotation of the blades 5 relative to the bone 6 according to the direction of rotation shown in Figure 2.

The notch 19 is laterally delimited by two longitudinal walls 21, planar and mutually parallel and such that their trace on any plane perpendicular to the axis A forms an angle of about 65° with a straight line R belonging to this plane and intersecting the axes B and D.

Figure 4 shows, partially superposed and illustrated with dashed lines, some possible positions assumed by one of the blades 5 during its closure or opening motion in shutter form.

The concentric circumferences shown in the figure represent the profiles of different bone sections 6 during the processing of the meat cut 2.

The straight line P that approximates the interior profile 20 of the blade 5 in proximity with the discontinuity of the profile 20 itself caused by the notch 19, is always substantially tangential to the profile of the bone 6 for the different sections of the blades 5, in the interval between the maximum and the minimum opening, which are possible in use.

Figure 5 shows a blade 5 together with the respective crank 17; the connection between the blade 5 and the crank 17, which gives rise to the articulation having as its axis of rotation the axis D, is obtained by the hot riveting of a pivot pin effected in proximity to the second extremity 16 of the blade 5 itself.

From Figure 5 it is evident that the thickness S₁ of the blade 5, substantially constant in the segment of active area 18 lying between the axis B and the notch 19, is lesser than the thickness S₂ of the blade 5 in proximity with its second extremity 16. The reason for the greater thickness of the blade 5 in proximity to the second extremity 16 of the blade 5 resides in the high mechanical stresses whereto this portion of the blade 5 is subjected during use.

Figure 6 shows a lateral view of a part of the boning station 3 of the machine 30 of Figure 1.

Motor means 40, a differential gear 41 and a head 4 are associated to a support structure 42. Elastic belts 43 transmit the rotary motion from the motor means to the differential gearing 41 and to one of the two tubular parts 13 and 14, and from the differential gearing 41 to the other of the two parts 13 and 14. As explained previously, the function of the differential gearing 41 is that of causing a relative rotary motion between the two tubular parts 13 and 14 that comprise the head 4 to cause the blades 5 to be displaced from and towards the axis of rotation A of the head itself. This displacement has the purpose of causing the blades 5 themselves to follow the profile of the bone 6 during the processing of the meat cut 2.

## Claims

1. A head (4) for boning meat cuts (2) such as hams and the like, of the type comprising: a first interior tubular part (13) provided with an axis (A) of rotation, a second exterior tubular part (14) coaxial to said first part (13), said tubular parts (13, 14) being axially hollow, able to be freely traversed by a bone (6) removed from said meat cuts (2) and able to rotate both jointly and relative to each other, a plurality of blades (5) for detaching the meat from the bone (6) each of said blades (5) being pivotally engaged with its first extremity (15) on one of said two tubular parts (13, 14) and with its second extremity (16) on a crank (17) in turn pivotally engaged on the other of said two tubular parts (13, 14), each of said blades (5) presenting an interior profile (20) delimiting a surface variable in its extension as a function of the relative rotation of the two coaxial tubular parts (13, 14) and a notch (19) to shear the tendons in said meat cut (2), said notch (19) determining a discontinuity in said interior profile (20), the longitudinal walls (21) that delimit said notch (19) being planar and mutually parallel; a straight line (P) that approximates the interior profile (20) of the blade (5) on the discontinuity of the profile (20) caused by said notch (19) being tangential to any circumference, coaxial with the axis of rotation (A), that can be inscribed inside the surface delimited by the interior profile (20) of the blades (5);
**characterized in that** the straight line (P) is tangential to said circumferences always in proximity of the discontinuity of the profile (20).

2. A head as claimed in claim 1, **characterised in that** the planar and mutually parallel longitudinal walls (21) laterally delimiting the notch (19) have a trace on any plan perpendicular to the axis (A), said trace forming an angle of about 65° with a straight line (R) belonging to said plane and intersecting two axes (B) and (D) of rotation of the blade (5) respectively relative to the tubular part (13, 14) whereto the blade is pivotingly engaged and relative to the crank (17).

3. A head as claimed in claim 1 or 2, **characterised in that** the thickness (S₁) of the blade (5) in the segment of active area (18) lying between the axis (B) and the notch (19), substantially constant along that segment, is lesser than the thickness (S₂) of the same blade (5) in proximity to its second extremity (16).

4. A head as claimed in any of the previous claims, **characterised in that** it further comprises means for imparting the relative rotation of one of the tubular bodies (13, 14) relative to the other.

5. A head as claimed in claim 4, **characterised in that** said means comprise a differential gearing (41).

6. A machine of the type comprising a head for boning meat cuts as claimed in claim 1, **characterised in that** the blades of said head are constructed according to claims 1 through 3.

7. A machine as claimed in claim 6, **characterised in that** it comprises a device (11) for lifting said meat cuts (2), said device (11) comprising a source (34) of pressurised gas, a pneumatic actuator (31) provided with a cylinder (32) and with a related movable stem (33) at the extremity whereof is present a cap (35) provided with a load sensor (36) able to detect the presence of a meat cut (2) to activate said movable stem (33) between a first extreme position for loading and a second extreme position for transferring and releasing the meat cut (2) to the respective holding means (7).

8. A machine as claimed in claim 6, **characterised in that** said sensor (36) is connected to a control and command unit (37) to activate said pneumatic actuator (31) by means of a valve assembly (38).

## Patentansprüche

1. Kopf (4) zum Entbeinen von Fleischteilen (2), wie Schinken und dergleichen, vom Typ enthaltend: einen ersten internen rohrförmigen Teil (13), versehen mit einer Drehachse (A), einen zweiten äusseren rohrförmigen Teil (14), koaxial zu dem genannten ersten Teil (13), wobei die genannten rohrförmigen Teile (13, 14) axial hohl sind, frei von einem von den genannten Fleischteilen (2) entfernten Knochen (6) durchlaufen werden können und in der Lage sind, sich zusammen wie auch im Verhältnis zueinander zu drehen, eine Anzahl von Messern (5) zum Lösen des Fleisches von dem Knochen (6), wobei jedes der genannten Messer (5) mit seinem ersten Ende (15) drehbar an einem der genannten beiden rohrförmigen Teile (13, 14) befestigt ist, und mit seinem zweiten Ende (16) an einer Kurbel (17), die wiederum an das andere der genannten beiden rohrförmigen Teile (13, 14) angelenkt ist, wobei jedes der genannten Messer (5) ein Innenprofil (20) aufweist, das eine in ihrer Ausdehnung veränderbare Oberfläche abgrenzt, als Funktion der entsprechenden Umdrehung der beiden koaxialen rohrförmigen Teile (13, 14), und eine Kerbe (19), um die Sehnen in dem genannten Fleischteil (2) zu durchtrennen, wobei die genannte Kerbe (19) eine Unterbrechung des genannten Innenprofils (20) beschreibt, und wobei die Längswände (21), welche die genannte Kerbe (19) eingrenzen, eben und parallel zueinander sind; eine gerade Linie (P), die sich dem Innenprofil (20) des Messers (5) an der durch die genannte Kerbe (19) hervorgerufenen Unterbrechung des Profils (20) annähert, tangential zu jedem Umfang und koaxial mit der Drehachse (A), die in die durch das Innenprofil (20) der Messer (5) abgegrenzte Oberfläche einbeschrieben werden kann; **dadurch gekennzeichnet, dass** die tangential zu den genannten Umfängen verlaufende gerade Linie (P) sich immer in Annäherung an die Unterbrechung des Profils (20) befindet.

2. Kopf nach Anspruch 1, **dadurch gekennzeichnet, dass** die ebenen und zueinander parallelen Längswände (21), die seitlich die Kerbe (19) eingrenzen, auf jeder Ebene lotrecht zu der Achse (A) eine Spur darstellen, wobei die genannte Spur einen Winkel von 65° mit einer geraden Linie (R) bildet, die zu der genannten Ebene gehört und zwei Drehachsen (B) und (D) des Messers (5) schneidet, jeweils im Verhältnis zu dem rohrförmigen Teil (13, 14), an welches das Messer drehbar angelenkt ist, und im Verhältnis zu der Kurbel (17).

3. Kopf nach Patentanspruch 1 oder 2, **dadurch gekennzeichnet, dass** die Stärke (S₁) des Messers (5) in dem zwischen der Achse (B) und der Kerbe (19) liegenden Segment des aktiven Bereiches (18), im wesentlichen gleichbleibend entlang diesem Segment, geringer ist als die Stärke (S₂) desselben Messers (5) in der Nähe seines zweiten Endes (16).

4. Kopf nach einem beliebigen der vorstehenden Patentansprüche, **dadurch gekennzeichnet, dass** er ausserdem Mittel zum Übertragen der entsprechenden Umdrehung auf einen der rohrförmigen Körper (13, 14) im Verhältnis zu dem anderen enthält.

5. Kopf nach Patentanspruch 4, **dadurch gekennzeichnet, dass** die genannten Mittel ein Differentialgetriebe (41) enthalten.

6. Maschine vom Typ enthaltend einen Kopf zum Entbeinen von Fleischteilen, wie in Patentanspruch 1 beansprucht, **dadurch gekennzeichnet, dass** die Messer des genannten Kopfes nach den Ansprüchen von 1 bis 3 hergestellt sind.

7. Maschine nach Patentanspruch 6, **dadurch gekennzeichnet, dass** sie eine Vorrichtung (11) zum Anheben der genannten Fleischteile (2) enthält, wobei die genannte Vorrichtung (11) eine Druckgasquelle (34) enthält, sowie einen Druckluftantrieb (31), versehen mit einem Zylinder (32) und einem entsprechenden beweglichen Schaft (33), an dessen Ende eine Kappe (35) vorhanden ist, versehen mit einem Ladefühler (36), der in der Lage ist, das Vorhandensein eines Fleischteils (2) zu erfassen, um den genannten beweglichen Schaft (33) zwischen einer ersten extremen Position zum Laden und einer zweiten extremen Position zum Transferieren und Freigeben des Fleischteils (2) an die jeweiligen Haltemittel (7) zu aktivieren.

8. Maschine nach Patentanspruch 6, **dadurch gekennzeichnet, dass** der genannte Fühler (36) mit Hilfe einer Ventilgruppe (38) an eine Steuer- und Antriebseinheit (37) zum Aktivieren des genannten Druckluftantriebs (31) angeschlossen ist.

## Revendications

1. Un dispositif (4) de désossement de portions (2) de viande telles que jambon et analogues, du type comprenant : une première partie tubulaire (13) intérieure dotée d'un axe (A) de rotation, une seconde partie tubulaire (14) extérieure, coaxiale à ladite première partie (13), lesdites parties tubulaires (13, 14) étant axialement creuses, à même d'être librement traversées par un os (6) enlevé desdites portions (2) de viande et de tourner à la fois conjointement et relativement l'une par rapport à l'autre ; une multiplicité de lames (5) pour séparer la viande de l'os (6), chacune desdites lames (5) ayant une première extrémité (15) fixée de manière pivotante sur l'une desdites deux parties tubulaires (13, 14) et une seconde extrémité (16) fixée de manière pivotante sur une manivelle (17) qui est quant à elle fixée de manière pivotante sur l'autre desdites deux parties tubulaires (13, 14), chacune desdites lames (5) présentant un profil intérieur (20) délimitant une surface de taille variable en fonction de la rotation réciproque des deux parties tubulaires (13, 14) coaxiales ainsi qu'une entaille (19) pour couper les tendons dans ladite portion (2) de viande, ladite entaille (19) déterminant une discontinuité dans ledit profil intérieur (20), les parois longitudinales (21) qui délimitent ladite entaille (19) étant planes et parallèles entre elles ; une droite (P), qui représente approximativement le profil intérieur (20) de la lame (5) sur la discontinuité du profil (20) déterminée par ladite entaille (19), étant tangente à un cercle quelconque coaxial audit axe de rotation (A), qui peut être inscrit à l'intérieur d'une surface délimitée par le profil intérieur (20) des lames (5) ;
**caractérisé en ce que** la droite (P) est tangente auxdits cercles toujours à proximité de la discontinuité du profil (20).

2. Un dispositif selon la revendication 1, **caractérisé en ce que** les parois longitudinales (21) planes et parallèles entre elles délimitant l'entaille (19) présentent une trace sur un plan quelconque perpendiculaire à l'axe (A), ladite trace formant un angle d'environ 65° avec une droite (R) reposant dans ledit plan et coupant deux axes (B) et (D) de rotation de la lame (5) par rapport à la partie tubulaire (13, 14) sur laquelle la lame est fixée de manière pivotante et, respectivement, par rapport à la manivelle (17).

3. Un dispositif selon la revendication 1 ou 2, **caractérisé en ce que** l'épaisseur (S₁) de la lame (5) dans le segment de zone active (18) s'étendant entre l'axe (B) et l'entaille (19), fondamentalement constante le long de ce segment, est inférieure à l'épaisseur (S₂) de la même lame (5) à proximité de sa seconde extrémité (16).

4. Un dispositif selon l'une quelconque des revendications précédentes, **caractérisé en ce qu'**il comprend également des moyens pour déterminer la rotation de l'une des parties tubulaires (13, 14) par rapport à l'autre.

5. Un dispositif selon la revendication 4, **caractérisé en ce que** lesdits moyens comprennent un engrenage différentiel (41).

6. Une machine du type comprenant un dispositif de désossement de portions de viande selon la revendication 1, **caractérisée en ce que** les lames dudit dispositif sont construites selon les revendications de 1 à 3.

7. Une machine selon la revendication 6, **caractérisée en ce qu'**elle comprend un dispositif (11) pour soulever lesdites portions (2) de viande, ledit dispositif (11) comprenant une source (34) de gaz sous pression, un actionneur pneumatique (31) équipé d'un cylindre (32) et d'une tringle mobile (33) à l'extrémité de laquelle se trouve un capuchon (35) doté d'un capteur de charge (36) capable de détecter la présence d'une portion de viande (2) pour activer le mouvement de ladite tringle mobile (33) entre une première position extrême de chargement et une seconde position extrême de transfert et de relâchement de la portion de viande (2) aux moyens de maintien (7) correspondants.

8. Une machine selon la revendication 6, **caractérisée en ce que** ledit capteur (36) est connecté à une unité de commande et de contrôle (37) pour activer ledit actionneur pneumatique (31) au moyen d'une vanne (38).
